# EUROPEAN PATENT SPECIFICATION

(11) **EP 1 248 975 B1**
(45) Date of publication and mention of the grant of the patent: **17.09.2003**
(21) Application number: 00984423.4
(22) Date of filing: 14.12.2000
(51) Int. Cl.: G06F 9/44

(54) **SYSTEM AND METHOD FOR CREATING A GRAPHICAL USER INTERFACE FROM A FILTER EXPRESSION TREE**
SYSTEM UND VERFAHREN ZUR ERSTELLUNG EINER GRAPHISCHEN BENUTZEROBERFLÄCHE AUS EINEM FILTER-EXPRESSIONSBAUM
SYSTEME ET PROCEDE DE CREATION D'UNE INTERFACE GRAPHIQUE A PARTIR D'UN ARBRE D'EXPRESSION DE FILTRES

(30) Priority: 15.12.1999 US 464019
(43) Date of publication of application: 16.10.2002
(73) Proprietor: Sun Microsystems, Inc., Santa Clara, California 95054 (US)
(72) Inventor: KRAUKLIS, Ralf, Uwe, Ottawa, Ontario K1N 6E7 (CA)
(74) Representative: Harris, Ian Richard
(86) International application number: US0034023
(87) International publication number: WO01044933

(56) References cited:
- EP-A- 0 841 614
- US-A- 5 907 640
- US-A- 5 995 938
- SHIROTA Y ET AL: "AUTOMATIC GUI GENERATION FROM DATABASE SCHEMA INFORMATION" SYSTEMS & COMPUTERS IN JAPAN, SCRIPTA TECHNICA JOURNALS. NEW YORK, US, vol. 28, no. 5, 1 May 1997 (1997-05-01), pages 1-10, XP000699985 ISSN: 0882-1666
- GABRIEL R: "The automatic generation of graphical user interfaces" COMPEURO '88. 'DESIGN: CONCEPTS, METHODS AND TOOLS' BRUSSELS, BELGIUM 11-14 APRIL 1988, WASHINGTON, DC, USA,IEEE COMPUT. SOC. PR, US, 11 April 1988 (1988-04-11), pages 330-339, XP010011822 ISBN: 0-8186-0834-X

## Description

### BACKGROUND OF THE INVENTION

### 1. Field of the Invention

The present invention relates to the fields of small footprint devices and graphical user interfaces (GUIs), and more particularly to a system and method for efficiently creating a graphical user interface from a filter expression tree.

### 2. Description of the Related Art

Graphical user interfaces (GUIs) enable users to interact with software applications in an intuitive manner, utilizing graphical components or controls, such as buttons, input text fields, menus, etc. Although graphical user interfaces are often associated with software applications that run on general computing devices, such as desktop computers. GUIs are becoming more common in other types of computing devices, such as small footprint devices.

The field of "smart" small footprint devices is growing and changing rapidly. Small footprint devices include handheld computers, personal data assistants (PDAs), cellular phones, global positioning system (GPS) receivers, game consoles, set-top boxes, and many more such devices. Small footprint devices are becoming increasingly powerful and enabled to run software applications or services historically associated with general computing devices, such as desktop computers. For example, many small footprint devices are now able to run web browser applications.

As small footprint devices have become more powerful and the software applications running on small footprint devices have become more complex. it has become increasingly desirable to enable users to easily interact with the applications through graphical user interfaces. However, small footprint devices may have very strong resource constraints, such as the amount of memory and the processing power available. Thus, it is often necessary or desirable to design specialized GUI code for software that runs in the environment of a small footprint device.

The source code to create graphical user interfaces for various portions of a software application often represents a significant portion of the code base for an application. GUI creation may involve performing such procedural operations as creating user interface components or controls, setting various attributes of the user interface components as desired, positioning the user interface components appropriately, etc. The resulting source code may comprise a long succession of function calls or other programmatic operations. For example, the process of positioning the user interface components may require many function calls to obtain the sizes of various aspects of the user interface components, interspersed with code to perform positioning logic, such as setting variable values to the values of component widths or heights, etc.

In a resource-constrained environment, such as a small footprint device, it is often desirable to reduce code size, e.g., in order to reduce the memory requirements to run a software application. One aspect of code size that may be possible to reduce is the size of the code for GUI creation. Instead of writing customized source code as described above for creating particular GUIs, it may be possible to provide a general method for GUI creation that may be used to automatically create certain GUIs.

Of course, in order to create GUIs in such a systematic manner, certain regularities must be identified in the GUIs to be created. One type of GUI that lends itself well to such systematic creation is a GUI for specifying a filter expression. Application programs provide filter expression GUIs to enable users to specify certain criteria that should be met when performing an operation. For example, an email application may provide a filter expression GUI for specifying criteria of email messages to block. As a simple example, such a GUI may enable a user to specify that email messages with a subject field containing a particular phrase or a sender field containing a particular name should be blocked or automatically moved to a trash folder.

Applications may utilize filter expression GUIs for any of various other purposes. For example, a word processor application may provide a filter expression GUI enabling a user to specify various document criteria to meet when performing a text search. As another example, applications that search databases may provide a GUI for specifying a filter expression to use when performing a database search or query. For example, an application for looking up telephone number information from a database may provide a GUI for specifying criteria regarding the telephone numbers to obtain and display.

Many types of filter expression GUIs share certain aspects in common. For example, the GUIs for both the message-blocking example and the text search example given above may include user interface components used to create Boolean expressions, together with user interface components for specifying terms. Instead of a long series of statements coded by a programmer to create user interface components, position the components, etc., it may be possible to automatically create a filter expression GUI using a systematic method. If an application utilizes multiple filter expression GUIs, each of these GUIs may be created using common code, which may reduce the size of the application. For example, in addition to the message-blocking filter expression GUI discussed above, an email application may also provide users with a filter expression GUI for performing email message searches. In this example, both of the filter expression GUIs may be created using common source code.

### SUMMARY OF THE INVENTION

The problems outlined above may in large part be solved by a system and method for creating a graphical user interface from a filter expression tree, as described herein. Filter expressions may be used for any of various purposes by application programs. An application program may create a filter expression tree representing a filter expression, e.g., by parsing stored information regarding the filter expression and using the information to create a tree structure with nodes comprising information specifying various aspects of the filter expression.

Leaf nodes of the filter expression tree may comprise information that specifies an attribute, a comparison operator, and a value. For example, an email application may create a filter expression tree with a leaf node of "sender contains 'John Doe"', where "sender" is the attribute, "contains" is the comparison operator, and "John Doe" is the value. The attribute, comparison operator, and value associated with a leaf node are together referred to as an "expression unit".

Non-leaf nodes of the filter expression tree may comprise information that specifies a Boolean operator, such as "AND", "OR", "XOR", "NOT", etc. These Boolean operators may logically connect the expression units specified by the leaf nodes, in order to form a complete filter expression. The child node(s) of a non-leaf node may either be a leaf node specifying an expression unit or another non-leaf node. Thus, each non-leaf node other than the root node may be seen as a root of a sub-tree specifying a sub-expression of the filter expression.

The filter expression tree may then be processed, in order to automatically create a graphical user interface (GUI) for the filter expression. The GUI may comprise sets of user interface components or controls, such as text field components/controls, selection components/controls, etc., where each set corresponds to an expression unit included in the filter expression tree. Each user interface component/control in the set may enable a user to specify information regarding a portion of the expression unit. For example, a GUI may include a set of user interface (UI) components with a first UI component enabling a user to select an attribute, a second UI component enabling a user to select a comparison operator appropriate for the attribute, and a third UI component enabling a user to select a value appropriate for the attribute.

Given the tree root node. the child nodes may be recursively traversed, adding sets of user interface components/controls representing expression units to the GUI as tree leaf nodes are reached. The UI components/controls for each expression unit may be initialized to appropriate values corresponding to the expression unit information. For example, for the "sender contains 'John Doe"' expression unit given above, the attribute UI component may be a selection UI component enabling a user to select from among entries such as "sender", "subject", "date", etc., and the selection UI component may be initialized so that the "sender" entry is selected.

The user interface components/controls may be added to a user interface "container", i.e., a user interface structure or object, such as a user interface panel or window, that is able to host user interface components/controls. As the UI components/controls are added to the UI container, the UI components/controls may be positioned in any way desirable, e.g., horizontally beginning with an attribute UI component on the left, a comparison operator UI component in the middle, and a value UI component on the right.

A hierarchy of UI containers may be created. That is, as each tree leaf node is processed, a separate UI container for hosting the UI components/controls representing the leaf node's expression unit may be created and added to a parent UI container. Creating a separate UI container for a node in this way may simplify the creation of the GUI by enabling the UI components/controls to be positioned on a UI container independently of where the node lies the filter expression tree. However, in an alternative embodiment, a single UI container may be used to host UI components/controls for the various nodes, and positioning offset information may be kept track of as the tree is traversed, enabling the UI components/controls to be positioned appropriately.

As each non-leaf node of the filter expression tree is reached during traversal of the tree, a selection UI component or control enabling the user to select a Boolean operator may be added to the GUI. This selection UI component/control may be initialized so that an entry corresponding to the Boolean operator information specified by the non-leaf node is selected. Similarly as discussed above, this selection UI component/control may be added to its own separate UI container, or a single UI container may be used.

Information referencing the user interface components may be stored in the filter expression tree as the graphical user interface is created. Once the GUI has been created, the application may interact with the graphical user interface by retrieving this information.

### BRIEF DESCRIPTION OF THE DRAWINGS

Other objects and advantages of the invention will become apparent upon reading the following detailed description and upon reference to the accompanying drawings in which:
Figure 1 is a block diagram illustrating one embodiment of a system supporting the creation of a graphical user interface from a filter expression tree;
Figure 2 is a diagram illustrating an example of a filter expression tree;
Figure 3 illustrates an exemplary GUI created from a filter expression tree;
Figure 4 is a flowchart diagram illustrating one embodiment of a method for systematically creating a GUI from a filter expression tree;
Figure 5 is a flowchart diagram illustrating one embodiment of a process for determining whether a filter expression tree node has child nodes; and
Figures 6A - 6B are a flowchart diagram illustrating one embodiment of a process for creating graphical user interface elements representing an expression unit of a filter expression tree.

While the invention is susceptible to various modifications and alternative forms, specific embodiments thereof are shown by way of example in the drawings and will be described herein in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION OF THE PREFERRED EMBODIMENTS

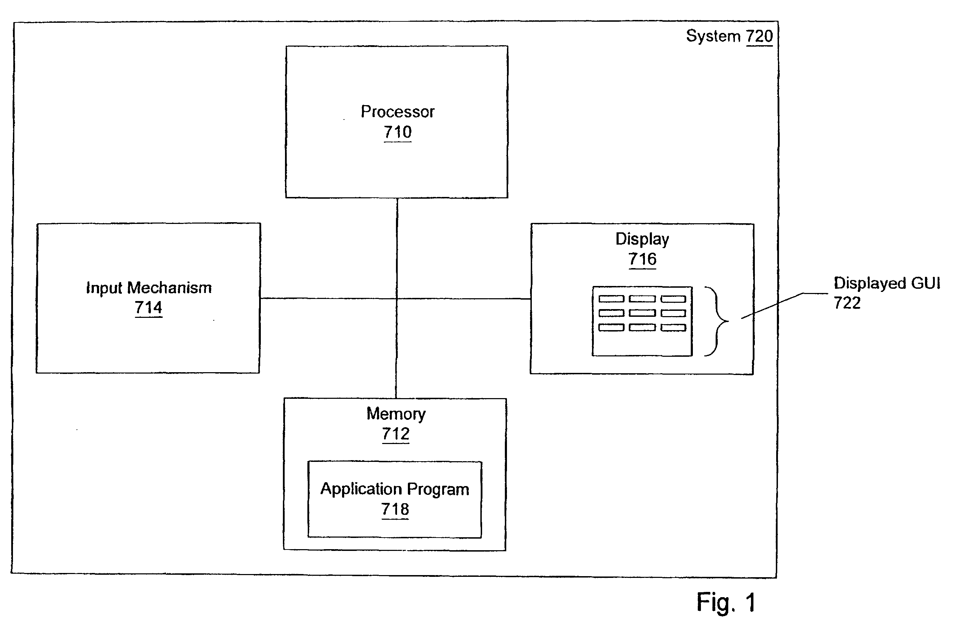

### Figure 1 - Exemplary System

Figure 1 is a block diagram illustrating one embodiment of a system 720 supporting the creation of a graphical user interface (GUI) from a filter expression tree. The system 720 may be employed in any of various types of computing devices, such as desktop computers or workstations, small footprint devices, etc.

As shown in Figure 1, the system 720 may include a processor 710. The processor 710 may be any of various types, including an x86 processor, e.g., a Pentium class, a PowerPC processor, a CPU from the SPARC family of RISC processors, as well as others. In various embodiments, such as an embodiment in which the system 720 illustrates a small footprint device, the processor 710 may be a less powerful processor than those listed above or may be a processor developed specifically for a small footprint device, such as a digital signal processor (DSP). The processor 710 may have various clock speeds. including clock speeds similar to those found in desktop computer-class processors, as well as lower speeds such as 16 MHz.

The system 720 also includes a memory 712 coupled to the processor 710. The memory 712 may comprise any of various types of memory, including DRAM, SRAM, EDO RAM, etc., or a non-volatile memory such as a magnetic media, e.g., a hard drive, or optical storage. The memory 712 may comprise other types of memory as well, or combinations thereof. For an embodiment in which the system 720 illustrates a small footprint device, the memory 712 may have a very small storage capacity compared to a typical desktop computer system.

As shown in Figure 1, the memory 712 may store an application program 718. The application program 718 may be any of various types of application programs that utilize filter expressions. For example, the application program 718 may be an email application that utilizes filter expressions to block or search through email messages, the application program 718 may be a word processor program that utilizes a filter expression to perform document searches, the application 718 may be an application operable to search or query a database using criteria specified by a filter expression, etc. The application program may be configured to automatically create a graphical user interface from a tree representing a filter expression, as described below.

As shown in Figure 1, the system 720 may also comprise a display 716. The display 716 may be any of various types, such as an LCD (liquid crystal display), a CRT (cathode ray tube) display, etc. It is noted that the display for a typical small footprint device, such as a smart cellular phone, may be small compared to the display of a desktop computer system.

Figure 1 illustrates a GUI 722 displayed on the display 716. The GUI 722 may be a GUI created from a filter expression tree in accordance with the present invention. The processor 710 executing code and data from the memory 712 provides a means for generating and displaying the GUI.

As shown in Figure 1, the system 720 may also comprise an input mechanism 714. The input mechanism 714 may be any of various types, as appropriate for a particular system. For example, the input mechanism may be a keyboard, mouse, trackball, touch pen, microphone, modem, infrared receiver, etc.

As noted above, in various embodiments, the system 720 may be illustrative of a small footprint device. As used herein, a small footprint device is a hardware device comprising computing resources such as a processor and a system memory, but having significantly greater constraints on one or more of these resources than a typical desktop computer has. For example, a typical small footprint device may have two megabytes of memory or less, whereas a typical desktop system may have 64 megabytes or more. Also a typical small footprint device may have significantly less processing power than a typical desktop computing system, either in terms of processor type, or processor speed, or both. For example, a particular personal data assistant device may have a 16 MHz processor, whereas a typical desktop system may have a processor speed of 100 MHz or higher. Also, a typical small footprint device may have a display size significantly smaller than the display screen of a desktop computing system. For example, the display screen of a handheld computer is typically small compared to the display screen of a desktop monitor. It is noted that the specific numbers given above are exemplary only and are used for comparison purposes.

Small footprint devices may also have constraints on other resource types compared to typical desktop computing systems, besides the memory, processor, and display size resources described above. For example, a typical small footprint device may not have a hard disk, may not have a network connection, or may have an intermittent network connection. or may have a wireless network connection, etc.

Many small footprint devices are portable and/or are small compared to desktop computers, but are not necessarily so. Also, many small footprint devices are primarily or exclusively battery-operated. Also, small footprint devices may typically have a more limited or narrow range of usage possibilities than a typical desktop computing system. Thus, in various embodiments, the system illustrated in Figure 1 is illustrative of, but is not limited to, any one of the following: handheld computers, wearable devices (e.g., wristwatch computers), personal data assistants (PDAs), "smart" cellular telephones, set-top boxes, game consoles, global positioning system (GPS) units, electronic textbook devices, etc. Since new classes of consumer devices are rapidly emerging, it is not possible to provide an exhaustive list of small footprint devices. However, the term "small footprint device" is intended to include such devices as may reasonably be included within the spirit and scope of the term as described above.

It is noted that in various embodiments the system and method described herein may also be employed in a general-purpose computer system, such as a desktop PC or mainframe computer.

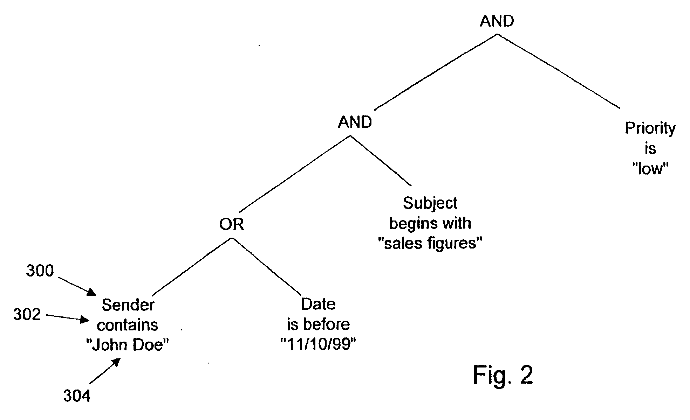

### Figure 2 - Filter Expression Tree

Figure 2 is a diagram illustrating an example of a filter expression tree. A filter expression tree is a tree data structure representing a filter expression. An application program may construct a filter expression tree in any of various ways. For example, an application may store information that specifies a filter expression and may construct a filter expression tree by parsing this information and creating a tree data structure representing the information. Information specifying a filter expression may be stored in any of various formats and may be stored using any of various persistent or non-persistent storage means. As an example, an email application program may store information in a text format such as:
AND (AND (OR ("Sender" "contains" "John Doe") ("Date" "is before" "11/10/99")) ("Subject" "begins with" "sales figures")) ("Priority" "is" "low"))
where this information specifies expression units logically related to each other via Boolean operators. As shown in Figure 2, this information may be used to create a filter expression tree that specifies a hierarchical relationship among various portions of the filter expression. It is noted that the format shown above is exemplary only, and the filter expression information may be specified and stored in any of various other formats, including text and binary formats.

As discussed above, filter expressions may be used for various purposes by application programs. For example, a word processor application program may persistently store information specifying the most recent text search performed by a user and may construct a filter expression tree from the information. Note that the filter expression information may be initially stored in a default format, e.g., as a part of the installation process for an application. For other types of application programs or for application programs running within certain environments, it may be desirable to always construct a filter expression tree from such default information, rather than from stored information that has been modified in response to a user action. Filter expression information may be stored internally within an application program, e.g., as default information specified by the application source code, or externally to an application program, e.g., by storing information in a file or database.

As shown in Figure 2, each leaf node of the constructed filter expression tree may comprise information that specifies an attribute, a comparison operator, and a value. As used herein, a leaf node is a node connected by a branch of the tree which forms a termination and does not connect to further branches. For example, as shown in Figure 2, one of the leaf nodes specifies an attribute 300 of "sender", a comparison operator 302 of "contains", and a value 304 of "John Doe". The attribute, comparison operator, and value associated with a leaf node are together referred to as an "expression unit".

It is noted that, in alternative embodiments, a filter expression tree may differ in various aspects from the exemplary Figure 2 filter expression tree. For example, instead of storing the elements of an expression unit within a single node, separate nodes may be used to store the expression unit attribute, comparison operator, and value information.

The attribute of an expression unit specifies some aspect of the entities to be filtered by the application program. The possible attributes may depend on a particular type of application program or on the particular type of entity to be filtered by the application program. For example, for a filter expression to be applied to email messages, attributes may include such aspects of email messages as the message sender, the message subject, the message date, the message priority, etc., as shown in Figure 2. Particular applications may define and use any of various types of attributes, as desired.

The comparison operator of an expression unit specifies a type of comparison to be applied to the attribute of the expression unit. The possible comparison operators may depend on the particular attribute or type of attribute. For example, if the expression unit attribute is a "date" attribute, then the possible comparison operators may include such operators as "is before", "is", "is after", etc. As another example, if the expression unit attribute is a textual attribute, e.g., message sender, message subject, etc., then the possible comparison operators may include such operators as "begins with", "contains", etc.

The value of an expression unit specifies a value to be used in determining whether an entity satisfies the criterion specified by an expression unit. The possible values may depend on the particular attribute or type of attribute. For example. if the expression unit attribute is a "date" attribute, then the possible values may be dates. If the expression unit attribute is a "message priority" attribute, then the possible values may include priority values, such as "low", "normal", "high", etc. If the expression unit attribute is a textual attribute, e.g., "message subject", then the possible values may include any text values.

It is noted that, in alternative embodiments, portions of a filter expression may be represented differently from the expression units described above. For example, instead of an expression unit with an attribute, comparison operator, and value, it may be appropriate or desirable to represent an expression unit as simply an attribute and value pair, e.g., if the comparison operator to be applied is always an implicit "is" operator.

As shown in Figure 2, the expression units specified by the filter expression tree leaf nodes may be logically connected to each other via Boolean operators specified by the non-leaf nodes of the filter expression tree. Thus, the expression units, together with the Boolean operators joining them, form a complete filter expression.

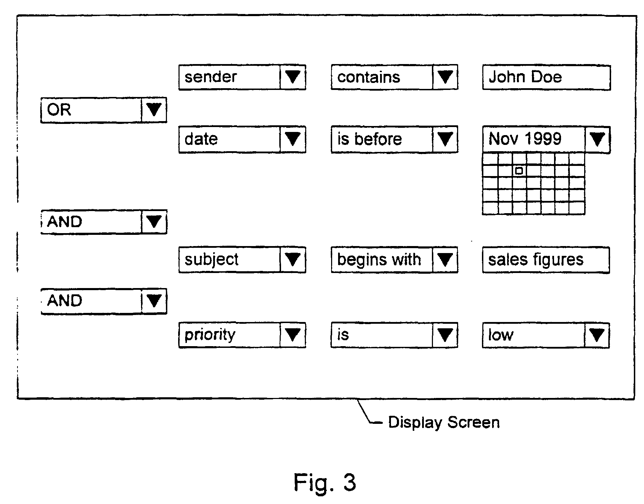

### Figure 3 - Exemplary GUI Created from Filter Expression Tree

Figure 3 illustrates an exemplary GUI created from a filter expression tree. The GUI shown in Figure 3 corresponds to the filter expression tree of Figure 2.

As shown, the GUI may include different types of user interface components or controls, as appropriate for representing particular expression units. For example, the user interface components or controls corresponding to the attribute and comparison operator portions of the expression units may be selection user interface components or controls; that is, user interface components permitting a user to select one of several choices. For example, in the Figure 3 GUI, in response to a user clicking on the user interface components corresponding to expression unit attributes, i.e., the left column of user interface components, a selectable list of attributes may be displayed, such as "sender", "date", "subject", etc.

The GUI may also comprise other types of user interface components. For example, the Figure 3 GUI includes text field user interface components enabling a user to enter free-form text for values of textual attributes and includes a date selector user interface component enabling a user to select a value for a "date" attribute.

As described below, GUIs for specifying filter expressions, such as the GUI illustrated in Figure 3, may be systematically created from a filter expression tree.

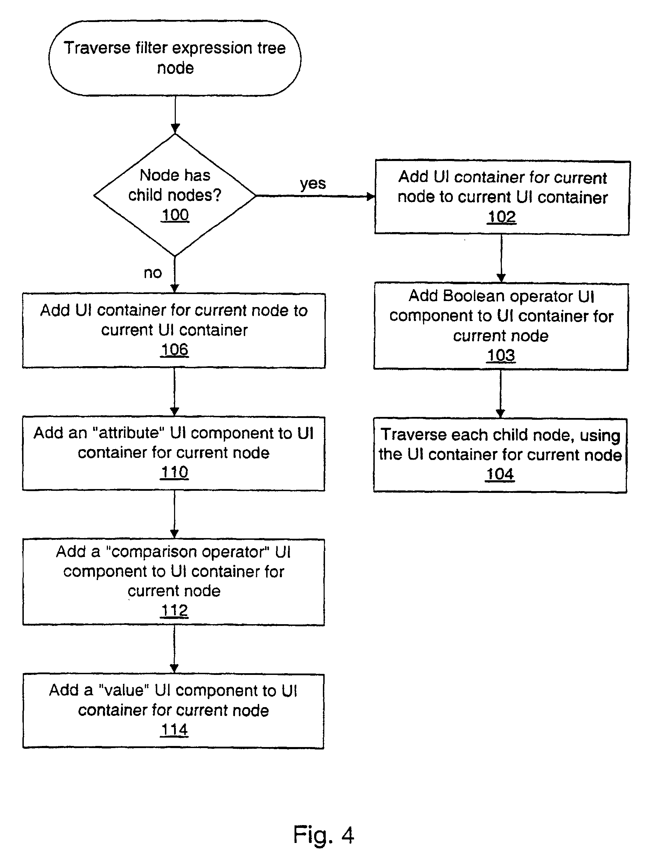

### Figure 4 - Creating a GUI from a Filter Expression Tree

Figure 4 is a flowchart diagram illustrating one embodiment of a method for systematically creating a GUI from a filter expression tree. The method shown in Figure 4 operates on particular filter expression tree nodes, starting with the root node, and may be applied recursively to child nodes, as discussed below. The Figure 4 method may be carried out by any of various application programs.

The Figure 4 method is described in terms of user interface "containers". A user interface container is a user interface object or structure on which user interface components, such as the components shown in Figure 3, may be hosted. For example, in an embodiment implemented using the Java™ programming language, a user interface container may be a Java™ Abstract Window Toolkit (AWT) user interface component, such as a java.awt.Panel user interface component. In other embodiments, a user interface container may be any of various other types of user interface objects or structures able to host user interface components or controls, such as windows, panels, etc.

A user interface container may be passed to the Figure 4 method. As described below, GUI components may be created and positioned on the container. If recursion is necessary, child user interface containers may be created and placed on the parent container. Such use of nested user interface containers may enable the Figure 4 method to be recursively applied so that user interface components may always be laid out on the container passed in to the method in the same way, regardless of where the node lies in the filter expression tree.

It is noted that in an alternative embodiment, the use of nested user interface containers may be omitted. For example, information regarding the current position offsets may be passed in to the method, enabling the method to correctly position user interface components on a single user interface container.

In step 100 of Figure 4, the filter expression tree node is checked to determine whether it has child nodes. The child nodes of a given node are those nodes (if any) that are directly connected beneath the given node in the tree hierarchy. One embodiment of step 100 is illustrated in more detail below.

If the node does have child nodes, then the node comprises Boolean operator information logically connecting the node's child nodes, as discussed above. In step 102 a user interface container for the current node may be created and added to the user interface container passed in to the method, Depending on a particular embodiment, the user interface container for the current node may be added to the user interface container passed in to the method implicitly as a part of the creation process or may be explicitly added, e.g., with an additional function or method call.

In step 103, a user interface component corresponding to the node's Boolean operator may be created and added to the user interface container for the current node. For example, a selection user interface component allowing a user to select from among Boolean operator entries, such as "AND", "OR", "XOR", "NOT", etc., may be added, or radio button user interface components corresponding to these operators may be added. The value of the Boolean operator UI component may be set to correspond to the Boolean operator specified by the node information.

In step 104, the method may be recursively applied to each child node, passing in the user interface container for the current node, created in step 102, as the user interface container method parameter to the child node.

If the node does not have child nodes, then the node is a leaf node and thus comprises information specifying an expression unit. In step 106, a user interface container for the current node, i.e., for the user interface components representing the expression unit, may be created on the user interface container passed in to the method.

In step 110, a user interface component corresponding to the "attribute" portion of the node's expression unit may be added to the user interface container for the current node, One embodiment of step 110 is discussed below.

In step 112, a user interface component corresponding to the "comparison operator" portion of the node's expression unit may be added to the user interface container for the current node. One embodiment of step 112 is discussed below.

In step 114, a user interface component corresponding to the "value" portion of the node's expression unit may be added to the user interface container for the current node. One embodiment of step 114 is discussed below.

As the user interface components are added in the steps described above, the components may be positioned in any way appropriate. For example, components may be positioned to appear as in the Figure 3 example, i.e., horizontally beginning with the attribute component on the left, the comparison operator component in the middle, and the value component on the right.

As noted above, Figure 4 represents one embodiment of a method for systematically creating a GUI from a filter expression tree, and various steps of Figure 4 may be added, omitted, combined, altered, performed in different orders, etc. For example, in some situations it may not be appropriate or desirable to enable users to specify which Boolean operators to use in a filter expression. In such a case, the GUI may be labeled to illustrate fixed Boolean operators, instead of adding user interface components enabling users to specify particular Boolean operators.

In various embodiments, the use of a method such as described above to automatically create a GUI may advantageously decrease the size of an application program. For example, as described above, customized source code to create a GUI may comprise procedural operations for creating user interface components or controls, setting various attributes of the user interface components as desired, positioning the user interface components appropriately, etc. A method for creating a GUI from a filter expression tree may enable these types of operations to be performed algorithmically, as described above. Additionally, the source code implementing the method may be usable to create multiple filter expression GUIs within an application program.

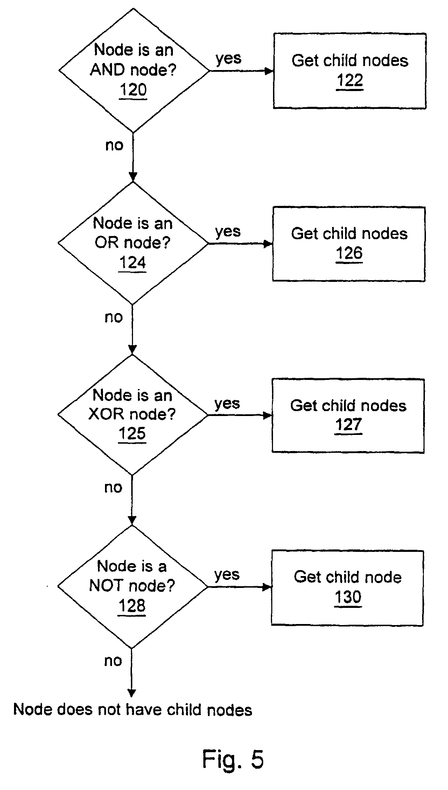

### Figure 5 - Determination of Child Nodes

Step 100 of Figure 4 may be accomplished in any of various ways. Figure 5 illustrates one embodiment of step 100. In Figure 5, the filter expression tree node is checked to see whether it corresponds to a Boolean operator. If so, then the node is a non-leaf node, and thus has child nodes.

In step 120, the node is checked to determine whether it is an AND Boolean operator node. Step 120 may be performed in any of various ways, depending on a particular type of application or application implementation. For example, an email program implemented using the Java™ programming language may utilize the standard javax.mail.search.SearchTerms classes to represent filter expression tree nodes. In this example, step 120 may be performed via a statement such as:
if (node instanceof javax.mail.search.AndTerm) ...

If the node is determined to be an AND Boolean operator node, then in step 122, the child nodes of the node are obtained. The child nodes may then be traversed as described above.

Otherwise, in step 124, the node is checked to determine whether it is an OR Boolean operator node, similarly is described above for step 120. If the node is determined to be an OR Boolean operator node, then in step 126, the child nodes of the node are obtained. The child nodes may then be traversed as described above.

Otherwise, in step 125, the node is checked to determine whether it is an XOR Boolean operator node, similarly is described above for step 120. If the node is determined to be an XOR Boolean operator node, then in step 127. the child nodes of the node are obtained. The child nodes may then be traversed as described above.

Otherwise, in step 128, the node is checked to determine whether it is a NOT Boolean operator node, similarly is described above for step 120. If the node is determined to be a NOT Boolean operator node, then in step 130, the child node of the node is obtained. (Note that NOT nodes may have a single child node.) The child node may then be traversed as described above.

If the node is not an AND, OR, or NOT Boolean node, then the node may a leaf node, as shown in Figure 5.

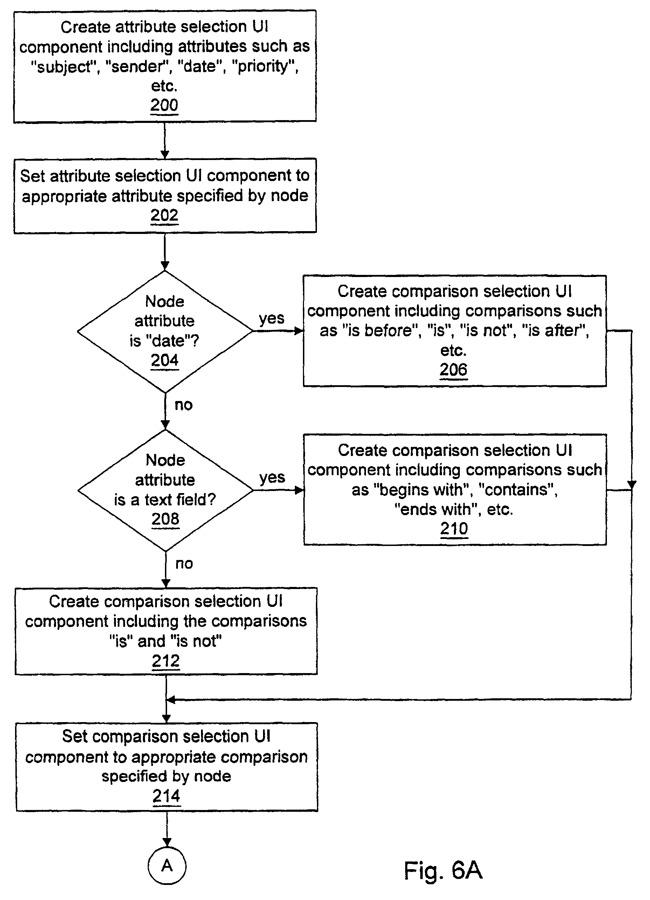

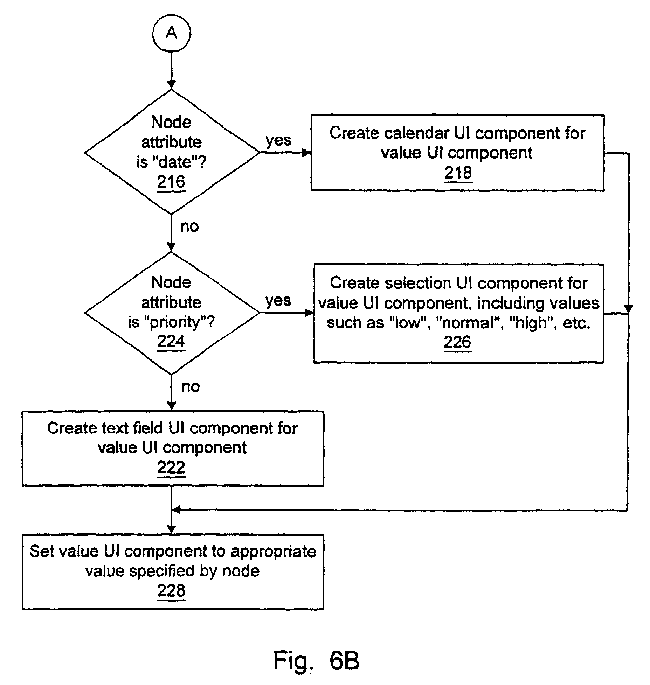

### Figure 6 - GUI Component Creation for Expression Units

As described above with reference to steps 110 - 114 of Figure 4, GUI components representing the elements of an expression unit may be created. Figures 6A and 6B (referred to collectively as Figure 6) illustrate one embodiment of steps 110 - 114 in more detail. The process of Figure 6 may be repeated for each expression unit of a filter expression tree. Although Figure 6 is shown in terms of an application creating a GUI for an email filter expression, the idea behind Figure 6 may readily be applied to other types of filter expressions.

In step 200, a selection user interface component representing the "attribute" portion of an expression unit is created. Various attributes may be added to this selection component, as appropriate. For example, as shown in Figure 6, for an email filter expression, attributes such as "subject", "sender", "date", "priority", etc. may be added. Step 200 may be implemented using any of various types of selection user interface components. For example, in an embodiment implemented using the Java™ programming language, step 200 may be implemented with source code such as:
java.awt.Choice attributeComponent = new java.awt.Choice ({"subject", "sender", "date", "priority"});

In step 202, the selection user interface component representing the expression unit attribute is set to the appropriate attribute, as specified by the node information. For example, in an embodiment in which nodes are represented using javax.mail.search.SearchTerms classes, step 202 may appear similar to:

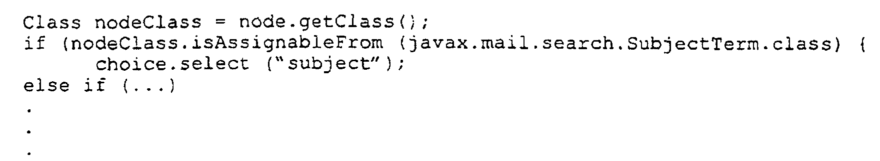

In steps 204 - 212, a selection user interface component representing the "comparison operator" portion of an expression unit is created. The selections placed in this selection user interface component may depend on the attribute specified for the node's expression unit. For example, as shown in steps 204 - 206, if the specified attribute is a "date" attribute. then the comparison operator selection component may include entries such as "is before", "is", "is not", "is after", etc. As shown in steps 208 - 210, if the specified attribute is a textual attribute, e.g., "subject" or "sender", then the comparison operator selection component may include entries such as "begins with", "contains", "ends with", etc. As shown in step 212, the entries for the comparison operator selection component may default to "is" and "is not" entries. For example, if the expression unit attribute is "priority", then these entries may be added.

In step 214. the selection user interface component representing the expression unit comparison operator is set to the appropriate comparison operator, as specified by the node information, similarly as described above for step 202.

As described above, the type of user interface component created to represent the "value" portion of an expression unit may differ. For example, as shown in steps 216 - 218, if the expression unit attribute is a "date" attribute, then a calendar user interface component may be created. As shown in steps 224 - 226, if the node attribute is a "priority" attribute, then a selection user interface component may be created, with entries such as "low", "normal". "high", etc. As shown in step 222. the default may be to create a text field user interface component allowing a user to enter free-form text, e.g.., to specify the value for a "subject" or "sender" attribute.

In step 228, the selection user interface component representing the expression unit value is set to the appropriate value, as specified by the node information, similarly as described above for step 202.

As noted above, Figure 6 represents one embodiment of a process of creating user interface components corresponding to expression unit elements, and various steps of Figure 6 may be added, omitted, combined, altered, performed in different orders, etc. For example, although Figure 6 is illustrated in terms of creating user interface components for a particular type of expression unit related to email messages, the process may of course be generalized to enable user interface components to be appropriately created for expression units related to any of various types of filter expressions. For example, the Figure 6 process may be implemented in such a way that a caller can specify a list of entries to be added to the attribute selection user interface component, can specify a list of comparison operator entries to associate with each attribute, etc. In particular embodiments, callers may be able to specify this type of information in any of various ways. For example, data structures representing the information may be defined and passed as parameters to a function or method.

### Use of Resulting Filter Expression GUI

An application may create a filter expression tree, create a top-level user interface container for the GUI to be created from the filter expression tree, such as a panel or window, and may pass this user interface container to a function or method that adds appropriate user interface structures and objects to the top-level user interface container as described above. Other parameters that specify information regarding the filter expression GUI to be created, such as information described above, may also be passed to the function or method.

Once a GUI has been created, the application may cause the GUI to be displayed. e.g. by calling a display method on a top-level user interface container for the GUI. In another embodiment, the GUI may be inherently displayed as a result of creating the user interface structures and objects.

An application program that uses a filter expression may interact with a GUI created from a filter expression tree in any of various ways, depending on a particular implementation. In one embodiment, user interface information, such as references to user interface components or controls, is added to the filter expression tree as a GUI is created. For example, in Figure 3, the bottom Boolean operator user interface component corresponds to the root node of the filter expression tree shown in Figure 2. Thus, a reference to this user interface component may be added to the root node of the filter expression tree. This user interface information may then be used by the application to interact with the GUI, similar to the interaction of an application with a filter expression GUI creating using conventional methods.

The application program may register event handlers for interacting with the filter expression GUI, if appropriate. The application may also add various other user interface components or controls to the GUI, such as an "OK" button and a "Cancel" button, and may register event handlers for these components. For example, in response to a user pressing an "OK" button, an application may be operable to retrieve the specified filter information from the filter expression tree and use the specified filter information to perform a filtering operation. For example, an application for searching a database of street addresses may use the filter information to perform an operation such as looking up and returning a set of street addresses for display to a user. If appropriate, the application may then store the retrieved information so that it can later be used to initialize a GUI to reflect the most recent filtering criteria specified by the user, e.g., the next time the user performs a database search.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for creating a graphical user interface, the method comprising:
creating a filter expression tree with nodes representing a filter expression;
traversing the filter expression tree. wherein said traversing the filter expression tree comprises processing each tree node;
said method **characterized in that**:
said processing each tree node comprises:
determining whether the tree node is a leaf node;
if the tree node is not a leaf node, recursively processing each child node of the tree node;
if the tree node is a leaf node, creating graphical user interface components representing the expression unit specified by the leaf node.

2. The method of claim 1,
wherein said creating graphical user interface components representing the expression unit specified by the leaf node comprises creating an "attribute" graphical user interface component, a "comparison operator" graphical user interface component, and a "value" graphical user interface component.

3. The method of claim 2,
wherein said creating an "attribute" graphical user interface component comprises setting the "attribute" graphical user interface component to the attribute specified by the tree node;
wherein said creating a "comparison operator" graphical user interface component comprises setting the "comparison operator" graphical user interface component to the comparison operator specified by the tree node;
wherein said creating a "value" graphical user interface component comprises setting the "value" graphical user interface component to the value specified by the tree node.

4. The method of claim 2,
wherein the filter expression is an expression for filtering electronic messages.

5. The method of claim 2,
wherein the filter expression is an expression for one of the group consisting of: filtering database queries, filtering database searches, and filtering document searches.

6. The method of claim 4,
wherein said creating an "attribute" graphical user interface component comprises creating a selection graphical user interface component, wherein said selection graphical user interface component comprises one or more attributes from the group consisting of:
message subject, message sender, message date, and message priority.

7. The method of claim 1,
wherein each leaf node of the tree comprises information specifying an expression unit, wherein each expression unit comprises an attribute, a comparison operator, and a value, and wherein each non-leaf node of the tree comprises information representing a Boolean operator.

8. A system comprising:
a processing unit;
memory coupled to the processing unit;
a program comprised in the memory, wherein the program is executable to create a filter expression tree with nodes representing a filter expression;
wherein the program is further executable to traverse the filter expression tree, wherein said traversing the filter expression tree comprises processing each tree node;
said system **characterized in that**:
said processing each tree node comprises:
determining whether the tree node is a leaf node;
if the tree node is not a leaf node. recursively processing each child node of the tree node;
if the tree node is a leaf node, creating graphical user interface components representing the expression unit specified by the leaf node.

9. The system of claim 8,
wherein said creating graphical user interface components representing the expression unit specified by the leaf node comprises creating an "attribute" graphical user interface component, a "comparison operator" graphical user interface component, and a "value" graphical user interface component.

10. The system of claim 9.
wherein said creating an "attribute" graphical user interface component comprises setting the "attribute" graphical user interface component to the attribute specified by the tree node;
wherein said creating a "comparison operator" graphical user interface component comprises setting the "comparison operator" graphical user interface component to the comparison operator specified by the tree node;
wherein said creating a "value" graphical user interface component comprises setting the "value" graphical user interface component to the value specified by the tree node.

11. The system of claim 9,
wherein the filter expression is an expression for filtering electronic messages.

12. The system of claim 9,
wherein the filter expression is an expression for one of the group consisting of: filtering database queries, filtering database searches, and filtering document searches.

13. The system of claim 11,
wherein said creating an "attribute" graphical user interface component comprises creating a selection graphical user interface component, wherein said selection graphical user interface component comprises one or more attributes from the group consisting of:
message subject, message sender. message date, and message priority.

14. The system of claim 8,
wherein each leaf node of the tree comprises information specifying an expression unit, wherein each expression unit comprises an attribute, a comparison operator, and a value, and wherein each non-leaf node of the tree comprises information representing a Boolean operator

15. A memory medium comprising program instructions which implement:
creating a filter expression tree with nodes representing a filter expression;
traversing the filter expression tree, wherein said traversing the filter expression tree comprises processing each tree node;
wherein said processing each tree node comprises:
determining whether the tree node is a leaf node;
if the tree node is not a leaf node, recursively processing each child node of the tree node;
if the tree node is a leaf node, creating graphical user interface components representing the expression unit specified by the leaf node.

16. The memory medium of claim 15,
wherein said creating graphical user interface components representing the expression unit specified by the leaf node comprises creating an "attribute" graphical user interface component, a "comparison operator" graphical user interface component, and a "value" graphical user interface component.

17. The memory medium of claim 16,
wherein said creating an "attribute" graphical user interface component comprises setting the "attribute" graphical user interface component to the attribute specified by the tree node;
wherein said creating a "comparison operator" graphical user interface component comprises setting the "comparison operator" graphical user interface component to the comparison operator specified by the tree node;
wherein said creating a "value" graphical user interface component comprises setting the "value" graphical user interface component to the value specified by the tree node.

18. The memory medium of claim 16,
wherein the filter expression is an expression for filtering electronic messages.

19. The memory medium of claim 18,
wherein said creating an "attribute" graphical user interface component comprises creating a selection graphical user interface component, wherein said selection graphical user interface component comprises one or more attributes from the group consisting of:
message subject, message sender. message date, and message priority.

20. The memory medium as recited in claim 15,
wherein each leaf node of the tree comprises information specifying an expression unit, wherein each expression unit comprises an attribute, a comparison operator, and a value, and wherein each non-leaf node of the tree comprises information representing a Boolean operator.

## Patentansprüche

1. Verfahren zum Erstellen einer graphischen Benutzeroberfläche, wobei das Verfahren aufweist:
Erstellen eines Filterausdrucksbaumes mit Knoten, die einen Filterausdruck repräsentieren,
Durchlaufen des Filterausdrucksbaumes, wobei das Durchlaufen des Filterausdrucksbaumes die Verarbeitung jedes Baumknotens aufweist,
wobei das Verfahren **dadurch gekennzeichnet ist:**
**daß** das Verarbeiten jedes Baumknotens aufweist:
das Bestimmen, ob der Baumknoten ein Blattknoten bzw. Endknoten ist,
wenn der Baumknoten kein Blattknoten ist, das rekursive Verarbeiten jedes Nachfolgerblatts des Baumknotens,
wenn der Baumknoten ein Blattknoten ist, das Erstellen einer Komponente der graphischen Benutzeroberfläche, die die Ausdruckseinheit darstellt, die von dem Blattknoten spezifiziert wird.

2. Verfahren nach Anspruch 1,
wobei das Erstellen der Komponente der graphischen Benutzeroberfläche, die die Ausdruckseinheit darstellt, die von dem Blattknoten spezifiziert wird, das Erzeugen einer "Attribut"-Komponente der graphischen Benutzeroberfläche, einer "Vergleichsoperator"-Komponente der graphischen Benutzeroberfläche und einer "Wert"-Komponente der graphischen Benutzeroberfläche aufweist.

3. Verfahren nach Anspruch 2,
wobei das Erzeugen einer "Attribut"-Komponente der graphischen Benutzeroberfläche das Einstellen der "Attribut"-Komponente der graphischen Benutzeroberfläche auf das von dem Baumknoten spezifizierte Attribut aufweist,
wobei das Erzeugen einer "Vergleichsoperator"-Komponente der graphischen Benutzeroberfläche das Einstellen der "Vergleichsoperator"-Komponente der graphischen Benutzeroberfläche auf den Vergleichsoperator, der von dem Baumknoten spezifiziert wird, aufweist,
wobei das Erstellen einer "Wert"-Komponente der graphischen Benutzeroberfläche das Einstellen der "Wert"-Komponente der graphischen Benutzeroberfläche auf den Wert, der von dem Baumknoten spezifiziert wird, aufweist.

4. Verfahren nach Anspruch 2,
wobei der Filterausdruck ein Ausdruck für das Filtem von elektronischen Nachrichten ist.

5. Verfahren nach Anspruch 2,
wobei der Filterausdruck ein Ausdruck für ein Element aus der Gruppe ist, die besteht aus:
Filterung von Datenbankabfragen, Filterung von Datenbanksuchen und Filterung von Dokumentsuchen.

6. Verfahren nach Anspruch 4,
wobei das Erzeugen einer "Attribut"-Komponente der graphischen Benutzeroberfläche das Erstellen einer Auswahlkomponente der graphischen Benutzeroberfläche aufweist, wobei die Auswahlkomponente der graphischen Benutzeroberfläche ein oder mehrere Attribute aus der Gruppe aufweist, die besteht aus:
Betreff der Nachricht, Absender der Nachricht, Datum der Nachricht und Priorität der Nachricht.

7. Verfahren nach Anspruch 1,
wobei jeder Blattknoten des Baums Informationen aufweist, die eine Ausdruckseinheit spezifizieren, wobei jede Ausdruckseinheit ein Attribut, einen Vergleichsoperator und einen Wert aufweist, und wobei jeder Knoten des Baums, der kein Blattknoten ist, Informationen aufweist, die einen Booleschen Operator darstellen.

8. System, das aufweist:
eine Verarbeitungseinheit,
Speicher, der mit der Verarbeitungseinheit gekoppelt ist,
ein Programm, das in dem Speicher aufgenommen ist, wobei das Programm ausführbar ist, um einen Filterausdrucksbaum zu erzeugen mit Knoten, die einen Filterausdruck darstellen,
wobei das Programm weiterhin ausführbar ist, um den Filterausdrucksbaum zu durchlaufen, wobei das Durchlaufen des Filterausdrucksbaums das Verarbeiten jedes Baumknotens aufweist, wobei das System **dadurch gekennzeichnet ist, daß**:
das Verarbeiten jedes Baumknotens ausweist:
das Bestimmen, ob der Baumknoten ein Blattknoten ist,
wenn der Baumknoten kein Blattknoten ist, das rekursive Verarbeiten jedes Nachfolgerknotens des Baumknotens,
wenn der Baumknoten ein Blattknoten ist, das Erstellen von Komponenten der graphischen Benutzeroberfläche, die die Ausdruckseinheit, die durch den Blattknoten spezifiziert wurde, darstellen.

9. System nach Anspruch 8,
wobei das Erstellen von Komponenten der graphischen Benutzeroberfläche, die die Ausdruckseinheit, die von dem Blattknoten spezifiziert wird, darstellen, das Erstellen einer "Attribut"-Komponente der graphischen Benutzeroberfläche, einer "Vergleichsoperator"-Komponente der graphischen Benutzeroberfläche und einer "Wert"-Komponente der graphischen Benutzeroberfläche aufweist.

10. System nach Anspruch 9,
wobei das Erstellen einer "Attribut"-Komponente der graphischen Benutzeroberfläche das Einstellen der "Attribut"-Komponente der graphischen Benutzeroberfläche auf das Attribut, das von dem Baumknoten spezifiziert wurde, aufweist,
wobei das Erzeugen einer "Vergleichsoperator"-Komponente der graphischen Benutzeroberfläche das Einstellen der "Vergleichsoperator"-Komponente der graphischen Benutzeroberfläche auf den Vergleichsoperator, der von dem Baumknoten spezifiziert wurde, aufweist,
wobei das Erstellen einer "Wert"-Komponente der graphischen Benutzeroberfläche das Einstellen der "Wert"-Komponente der graphischen Benutzeroberfläche auf den Wert, der von dem Baumknoten spezifiziert wurde, aufweist.

11. System nach Anspruch 9,
wobei der Filterausdruck ein Ausdruck für das Filtern von elektronischen Nachrichten ist.

12. System nach Anspruch 9,
wobei der Filterausdruck ein Ausdruck für ein Element der Gruppe ist, die besteht aus: Filterung von Datenbankabfragen, Filterung von Datenbanksuchen und Filterung von Dokumentsuchen.

13. System nach Anspruch 11,
wobei das Erstellen einer "Attribut"-Komponente der graphischen Benutzeroberfläche das Erstellen einer Auswahlkomponente der graphischen Benutzeroberfläche aufweist, wobei die Auswahlkomponente der graphischen Benutzeroberfläche ein oder mehrere Attribute aus der Gruppe aufweist, die besteht aus:
Betreff der Nachricht, Absender der Nachricht, Datum der Nachricht und Priorität der Nachricht.

14. System nach Anspruch 8,
wobei jeder Blattknoten des Baums Information aufweist, die eine Ausdruckseinheit spezifiziert, wobei jede Ausdruckseinheit ein Attribut, einen Vergleichsoperator und einen Wert aufweist, und wobei jeder Knoten des Baumes, der kein Blattknoten ist, Information aufweist, die einen Booleschen Operator darstellt.

15. Speichermedium, das Programmbefehle aufweist, die implementieren:
das Erzeugen eines Filterausdrucksbaumes mit Knoten, die einen Filterausdruck darstellen,
das Durchlaufen des Filterausdrucksbaumes, wobei das Durchlaufen des Filterausdrucksbaumes das Verarbeiten jedes Baumknotens aufweist,
wobei das Verarbeiten jedes Baumknotens aufweist:
das Bestimmen, ob der Baumknoten ein Blattknoten ist,
falls der Baumknoten kein Blattknoten ist, das rekursive Verarbeiten jedes Nachfolgerknotens des Baumknotens,
wenn der Baumknoten ein Blattknoten ist, Erzeugen von Komponenten der graphischen Benutzeroberfläche, die die Ausdruckseinheit darstellen, die von dem Blattknoten spezifiziert wird.

16. Speichermedium nach Anspruch 15,
wobei das Erzeugen der Komponenten der graphischen Benutzeroberfläche, die die Ausdruckseinheit, welche von dem Blattknoten spezifiziert wird, darstellen, das Erzeugen einer "Attribut"-Komponente der graphischen Benutzeroberfläche, einer "Vergleichsoperator"-Komponente der graphischen Benutzeroberfläche und einer "Wert"-Komponente der graphischen Benutzeroberfläche aufweist.

17. Speichermedium nach Anspruch 16,
wobei das Erzeugen einer "Attribut-Komponente der graphischen Benutzeroberfläche das Einstellen der "Attribut"-Komponente der graphischen Benutzeroberfläche auf das Attribut, das von dem Baumknoten spezifiziert wird, aufweist,
wobei das Erzeugen einer "Vergleichsoperator"-Komponente der graphischen Benutzeroberfläche das Einstellen der 'Vergleichsoperator"-Komponente der graphischen Benutzeroberfläche auf den Vergleichsoperator, der von dem Baumknoten spezifiziert wird, aufweist,
wobei das Erstellen einer "Wert"-Komponente der graphischen Benutzeroberfläche das Einstellen der "Wert"-Komponente der graphischen Benutzeroberfläche auf den Wert, der von dem Baumknoten spezifiziert wird, aufweist.

18. Speichermedium nach Anspruch 16,
wobei der Filterausdruck ein Ausdruck für das Filtern von elektronischen Nachrichten ist.

19. Speichermedium nach Anspruch 18,
wobei das Erzeugen einer "Attribut"-Komponente der graphischen Benutzeroberfläche das Erzeugen einer Auswahlkomponente der graphischen Benutzeroberfläche aufweist, wobei die Auswahlkomponente der graphischen Benutzeroberfläche ein oder mehrere Attribute aufweist aus der Gruppe, die besteht aus:
Betreff der Nachricht, Absender der Nachricht, Datum der Nachricht und Priorität der Nachricht.

20. Speichermedium nach Anspruch 15,
wobei jeder Blattknoten des Baums Information aufweist, die eine Ausdruckseinheit spezifiziert, wobei jede Ausdruckseinheit ein Attribut, einen Vergleichsoperator und einen Wert aufweist, und wobei jeder Knoten des Baums, der kein Blattknoten ist, Information aufweist, die einen Booleschen Operator darstellt.

## Revendications

1. Procédé pour créer une interface utilisateur graphique, le procédé comprenant :
la création d'un arbre d'expression de filtre avec des noeuds représentant une expression de filtre ;
la traversée de l'arbre d'expression de filtre, dans laquelle ladite traversée de l'arbre d'expression de filtre comprend le traitement de chaque noeud de l'arbre ;
ledit procédé étant **caractérisé en ce que** :
ledit traitement de chaque noeud de l'arbre comprend :
le fait de déterminer si le noeud de l'arbre est un noeud feuille ;
si le noeud de l'arbre n'est pas un noeud feuille, traiter récursivement chaque noeud enfant du noeud de l'arbre ;
si le noeud de l'arbre est un noeud feuille, créer des composants d'interface utilisateur graphique représentant l'unité d'expression spécifiée par le noeud feuille.

2. Procédé selon la revendication 1,
dans lequel ladite création de composants d'interface utilisateur graphique représentant l'unité d'expression spécifiée par le noeud feuille comprend la création d'un composant d'interface utilisateur graphique "attribut", d'un composant d'interface utilisateur graphique "opérateur de comparaison", et d'un composant d'interface utilisateur graphique "valeur".

3. Procédé selon la revendication 2,
dans lequel ladite création d'un composant d'interface utilisateur graphique "attribut" comprend l'affectation au composant d'interface utilisateur graphique "attribut" de la valeur de l'attribut spécifié par le noeud de l'arbre ;
dans lequel ladite création d'un composant d'interface utilisateur graphique "opérateur de comparaison" comprend l'affectation au composant d'interface utilisateur graphique "opérateur de comparaison" de la valeur de l'opérateur de comparaison spécifié par le noeud de l'arbre ;
dans lequel ladite création d'un composant d'interface utilisateur graphique "valeur" comprend l'affectation au composant d'interface utilisateur graphique "valeur" de la valeur spécifiée par le noeud de l'arbre.

4. Procédé selon la revendication 2,
dans lequel l'expression de filtre est une expression destinée à filtrer des messages électroniques.

5. Procédé selon la revendication 2, dans lequel l'expression de filtre est une expression pour l'un du groupe constitué de : le filtrage de requête de base de données, le filtrage de recherche de base de données, et le filtrage de recherche de document.

6. Procédé selon la revendication 4,
dans lequel ladite création d'un composant d'interface utilisateur graphique "attribut" comprend la création d'un composant d'interface utilisateur graphique de sélection, dans laquelle ledit composant d'interface utilisateur graphique de sélection comprend un ou plusieurs attributs du groupe constitué de :
sujet de message, émetteur de message, date de message, et priorité de message.

7. Procédé selon la revendication 1,
dans lequel chaque noeud feuille de l'arbre comprend une information spécifiant une unité d'expression,
dans lequel chaque unité d'expression comprend un attribut, un opérateur de comparaison, et une valeur, et dans lequel chaque noeud non feuille de l'arbre comprend une information représentant un opérateur booléen.

8. Système comprenant :
une unité de traitement ;
une mémoire couplée à l'unité de traitement ;
un programme compris dans la mémoire, dans lequel le programme est un programme exécutable destiné à créer un arbre d'expression de filtre avec des noeuds représentant une expression de filtre ;
dans lequel le programme est de plus un programme exécutable destiné à traverser l'arbre d'expression de filtre, dans lequel ladite traversée de l'arbre d'expression de filtre comprend le traitement de chaque noeud de l'arbre ;
ledit système étant **caractérisé en ce que** :
ledit traitement de chaque noeud de l'arbre comprend :
le fait de déterminer si un noeud de l'arbre est un noeud feuille ;
si le noeud de l'arbre n'est pas un noeud feuille, le traitement récursif de chaque noeud enfant du noeud de l'arbre ;
si le noeud de l'arbre est un noeud feuille la création de composants d'interface utilisateur graphique représentant l'unité d'expression spécifiée par le noeud feuille.

9. Système selon la revendication 8, dans lequel ladite création de composants d'interface utilisateur graphique représentant l'unité d'expression spécifiée par le noeud feuille comprend la création d'un composant d'interface utilisateur graphique "attribut", d'un composant d'interface utilisateur graphique "opérateur de comparaison", et d'un composant d'interface utilisateur graphique "valeur".

10. Système selon la revendication 9,
dans lequel ladite création d'un composant d'interface utilisateur graphique "attribut" comprend l'affectation au composant d'interface utilisateur graphique "attribut" de la valeur de l'attribut spécifié par le noeud de l'arbre ;
dans lequel ladite création d'un composant d'interface utilisateur graphique "opérateur de comparaison" comprend l'affectation au composant d'interface utilisateur graphique "opérateur de comparaison" de la valeur de l'opérateur de comparaison spécifiée par le noeud de l'arbre ;
dans lequel ladite création d'un composant d'interface utilisateur graphique "valeur" comprend l'affectation au composant d'interface utilisateur graphique "valeur" de la valeur spécifiée par le noeud de l'arbre.

11. Système selon la revendication 9,
dans lequel l'expression de filtre est une expression destinée à filtrer des messages électroniques.

12. Système selon la revendication 9,
dans lequel l'expression de filtre est une expression pour l'un du groupe consistant en : le filtrage de requête de base de données, le filtrage de recherche de base de données, et le filtrage de recherche de document.

13. Système selon la revendication 11,
dans lequel ladite création d'un composant d'interface utilisateur graphique "attribut" comprend la création d'un composant d'interface utilisateur graphique de sélection, dans lequel ledit composant d'interface utilisateur graphique de sélection comprend un ou plusieurs attributs du groupe constitué de :
sujet de message, émetteur de message, date de message, et priorité de message.

14. Système selon la revendication 8,
dans lequel chaque noeud feuille de l'arbre comprend une information spécifiant une unité d'expression, dans lequel chaque unité d'expression comprend un attribut, un opérateur de comparaison et une valeur et dans lequel chaque noeud non feuille de l'arbre comprend une information représentant un opérateur booléen.

15. Ressource de mémoire comprenant des instructions de programme qui réalisent :
la création d'un arbre d'expression de filtre avec des noeuds représentant une expression de filtre ;
la traversée de l'arbre d'expression de filtre, dans lequel ladite traversée de l'arbre d'expression de filtre comprend le traitement de chaque noeud de l'arbre ;
dans lequel ledit traitement de chaque noeud de l'arbre comprend :
le fait de déterminer si le noeud de l'arbre est un noeud feuille ;
si le noeud de l'arbre n'est pas un noeud feuille, le traitement récursif de chaque noeud enfant du noeud de l'arbre ;
si le noeud de l'arbre est un noeud feuille, la création de composants d'interface utilisateur graphique représentant l'unité d'expression spécifiée par le noeud feuille.

16. Ressource de mémoire selon la revendication 15,
dans lequel ladite création de composants d'interface utilisateur graphique représentant l'unité d'expression spécifiée par le noeud feuille comprend la création d'un composant d'interface utilisateur graphique "attribut", d'un composant d'interface utilisateur graphique "opérateur de comparaison", et d'un composant d'interface utilisateur graphique "valeur".

17. Ressource de mémoire selon la revendication 16,
dans lequel ladite création d'un composant d'interface utilisateur graphique "attribut" comprend l'affectation au composant d'interface utilisateur graphique "attribut" de la valeur de l'attribut spécifié par le noeud de l'arbre ;
dans lequel ladite création d'un composant d'interface utilisateur graphique "opérateur de comparaison" comprend l'affectation au composant d'interface utilisateur graphique "opérateur de comparaison" de l'opérateur de comparaison spécifié par le noeud de l'arbre ;
dans lequel ladite création d'un composant d'interface utilisateur graphique "valeur" comprend l'affectation au composant d'interface utilisateur graphique "valeur" de la valeur spécifiée par le noeud de l'arbre.

18. Ressource de mémoire selon la revendication 16,
dans lequel l'expression de filtre est une expression destinée à filtrer des messages électroniques.

19. Ressource de mémoire selon la revendication 18,
dans lequel ladite création d'un composant d'interface utilisateur graphique "attribut" comprend la création d'un composant d'interface utilisateur graphique de sélection, dans lequel ledit composant d'interface utilisateur graphique de sélection comprend un ou plusieurs attributs du groupe comprenant :
sujet de message, émetteur de message, date de message, et priorité de message.

20. Ressource de mémoire selon la revendication 15, dans lequel chaque noeud feuille de l'arbre comprend une information spécifiant une unité d'expression, dans lequel chaque unité d'expression comprend un attribut, un opérateur de comparaison, et une valeur, et dans lequel chaque noeud non feuille de l'arbre comprend une information représentant un opérateur booléen.
